(19) Europäisches Patentamt
European Patent Office
Office européen des brevets

(11) Numéro de publication: **0 214 351 B1**

(12) **FASCICULE DE BREVET EUROPEEN**

(45) Date de publication de fascicule du brevet: **08.07.92**

(51) Int. Cl.⁵: **C07F 9/547**, C07F 9/165, C07F 9/09, C07F 9/24, C08K 5/49, C08K 5/52

(21) Numéro de dépôt: **85401742.3**

(22) Date de dépôt: **06.09.85**

# (54) Composés organophosphorés, un procédé pour leur préparation et compositions polymères ignifigées au moyen desdits composés.

(43) Date de publication de la demande:
**18.03.87 Bulletin 87/12**

(45) Mention de la délivrance du brevet:
**08.07.92 Bulletin 92/28**

(84) Etats contractants désignés:
**AT BE CH DE FR GB IT LI LU NL SE**

(56) Documents cités:
**FR-A- 2 105 859**
**FR-A- 2 567 127**
**US-A- 3 286 001**
**US-A- 3 286 002**
**US-A- 4 042 561**
**US-A- 4 405 738**
**US-A- 4 536 530**

**CHEMICAL ABSTRACTS, vol. 90, no. 7, 12 février 1979, page 566, no. 54419v, Columbus, Ohio, US; O.N. NURETDINOVA et al.: "Isomerization of S-2-hydroxyalkyl esters of phosphorus acids", & IZV. AKAD. NAUK SSSR, SER. KHIM. 1978, (9), 2142-4**

(73) Titulaire: **ELF ATOCHEM S.A.**
**4 & 8, Cours Michelet La Défense 10**
**F-92800 Puteaux(FR)**

(72) Inventeur: **Brossas, Jean**
**21 rue d'Oslo**
**F-92080 Paris La Defense(FR)**
Inventeur: **Clouet, Gilbert**
**6 rue des Jardins**
**F-67610 La Wantzenau(FR)**
Inventeur: **Knipper, Magali**
**17 rue de la Patrie**
**F-67300 Schiltigheim(FR)**

(74) Mandataire: **Rochet, Michel**
**ELF ATOCHEM S.A. Département Propriété Industrielle 4-8, Cours Michelet La Défense 10 - Cedex 42**
**F-92091 Paris-La-Défense(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

**CHEMICAL ABSTRACTS, vol. 86, no. 23, 6 juin 1977, page 496, no. 170783a, Columbus, Ohio, US; O.N. NURETDINOVA et al.: "Isomerization of O,O-dialkyl S-(2-hydroxyalkyl) thiophosphates", & IZV. AKAD. NAUK SSSR, SER. KHIM. 1977, (2), 487-8**

**CHEMICAL ABSTRACTS, vol. 94, no. 26, 29 juin 1981, page 712, no. 218852s, Columbus, Ohio, US; ZENG-SHOU TONG: "Organic amidophosphorus compounds. IV. Ethyleneimides of phosphorus compounds", & HUA HSUEH HSUEH PAO 1981, 39(1), 69-74**

## Description

La présente invention concerne des composés organophosphorés, un procédé pour leur préparation et des compositions polymères ignifugées au moyen desdits composés.

Les techniques classiques d'ignifugation consistant à imprégner ou à enduire un polymère combustible par des produits ayant la propriété de réduire leur inflammabilité, sous forme de revêtements, vernis ou peintures sont souvent difficilement applicables et très coûteuses. Dans le cas de certains polymères thermoplastiques, on a également préconisé l'incorporation de composés phosphorés ou d'additifs du type polyphosphazène à la masse même du polymère à ignifuger. Ainsi le brevet américain n° 4.042.561 décrit une composition à retardement de flamme comprenant un matériau organique normalement inflammable choisi parmi les résines de polyesters, les résines de polyamides, les résines cellulosiques, les polyoléfines, le polychlorure de vinyle, le polystyrène, les résines polycarbonates et les résines polyuréthanes et une quantité retardatrice de flamme d'un polyphosphazène de formule :

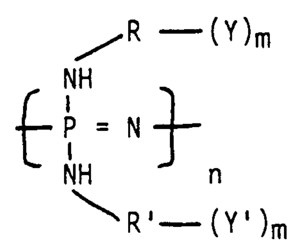

dans laquelle n est au moins égal à 1, R et R' (identiques ou différents) sont des groupes aryles, Y et Y' (identiques ou différents) sont des atomes d'halogènes des groupes alkyle inférieur, aryle, alkoxy, arylhexy non substitués au substitués par un halogène et n est égal à une valeur de 0 à 10. Le brevet français n° 2.105.859 décrit un agent retardateur de flamme pour polyesters et polyuréthanes, ayant pour formule :

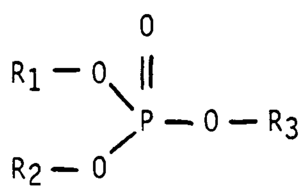

dans laquelle $R_1$ est un radical alkyle halogéné, $R_2$ est un radical alkyle, et $R_3$ est un radical alkyle hydroxylé.

Il convient de remarquer qu'aucun de ces deux documents n'enseigne l'ignifugation de polymères acryliques, de polyéthylène radicalaire ou de polystyrène.

En ce qui concerne l'ignifugation de polymères, les problèmes à résoudre pour l'incorporation d'un retardateur de flamme sont les suivants :

- le retardateur de flamme ne doit pas provoquer une dégradation notable des propriétés mécaniques et physiques du polymère.
- la composition de polymère obtenue doit présenter une valeur de l'indice limite d'oxygène (tel que mesuré par exemple selon la norme ASTM D 2863) aussi élevée que possible.
- la concentration du retardateur de flamme dans la composition de polymère doit, pour des considérations économiques, être aussi faible que possible.

En vue de résoudre les problèmes précités, la demanderesse a été conduite à préparer des composés organophosphorés inconnus jusqu'alors et, pour certains composés organophosphorés dejà connus, à mettre au point un nouveau procédé en vue de leur préparation. L'état de la technique relatif à de tels composés est résumé ci-après. Le brevet américain n° 3.286.002 décrit en son exemple 13 l'hexakis-N (5-sulfhydroéthyle)triphosphonitrilate de formule $N_3P_3(NH\text{-}CH_2\text{-}CH_2\text{-}SH)_6$, obtenu à partir de l'hexakis N-(S-benzylthioéthyle)triphosphonitrilate. Le brevet américain n° 3.286.001 décrit en son exemple 1 l'O-O'-diéthyl,N-(2-sulfhydroéthyl)phosphoramidothionate de formule :

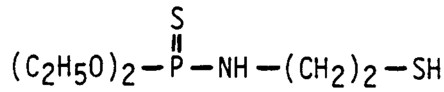

obtenu à partir de la cystéamine. L'article analysé par Chemical Abstracts (1977) 86:170782a décrit l'obtention de mercaptoalkylphosphates de formule

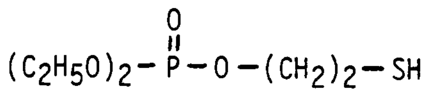

par isomérisation d'O,O-dialkyl S-(2-hydroxyalkyl)thiophosphates. L'article analysé par Chemical Abstracts (1981) 94:218 852s décrit le composé de formule

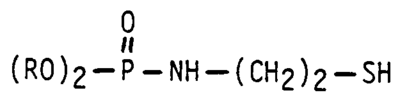

dans laquelle R est un radical alkyle ayant de 2 à 4 atomes de carbone, obtenu par réaction entre $H_2S$ et un dérivé d'aziridine.

Un premier objet de la présente invention consiste en des composés organophosphorés choisis parmi :

- (I) les dérivés soufrés d'hexahalogénocyclotriphosphazène de formule

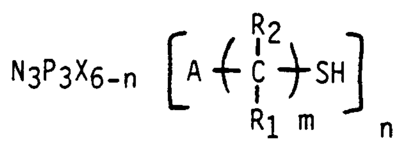

dans laquelle $1 \leqq n \leqq 5$, $1 \leqq m \leqq 4$, $R_1$ et $R_2$ sont choisis parmi l'atome d'hydrogène et les radicaux méthyle et éthyle, X est un atome d'halogène et A est choisi parmi l'atome d'oxygène et le radical NH, et

- (II) les composés de formule

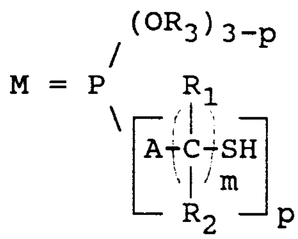

dans laquelle $1 \leqq p \leqq 3$, $1 \leqq m \leqq 4$, $R_1$ et $R_2$ sont choisis parmi l'atome d'hydrogène et les radicaux méthyle et éthyle, et

. soit $R_3$ est choisi parmi les radicaux hydrocarbonés saturés ayant de 1 à 6 atomes de carbone, M est le soufre et A est l'oxygène,

. soit $R_3$ est le radical méthyle, M est choisi parmi le soufre et l'oxygène et A est choisi parmi l'oxygène et le radical NH

à l'exception de ceux pour lesquels :

. p = 1, $R_3$ est le radical méthyle, A est l'oxygène, M est l'oxygène, m = 2 et $R_1$ = $R_2$ = hydrogène ou méthyle, ou bien

. p = 3, M est l'oxygène, m = 2, A est choisi parmi l'oxygène, le soufre ou le radical NH, ou encore p = 1, M est le soufre, A est le radical NH, $2 \leqq m \leqq 7$, $R_1$ = $R_2$ = hydrogène ou méthyle.

Parmi la classe des composés organophosphorés selon l'invention, on peut citer notamment le

monocystéaminopentachlorocyclotriphosphazène, le diéthyl thio-N-cystéaminophosphate et le diméthyldithioéthylphosphate.

Un second objet de la présente invention concerne un procédé de préparation de composés organophosphorés choisis parmi :

- (I) les dérivés soufrés d'hexahalogénocyclotriphosphazène de formule :

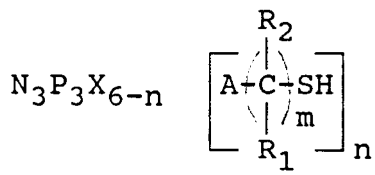

dans laquelle $1 \leqq n \leqq 6, 1 \leqq m \leqq 4$, $R_1$ et $R_2$ sont choisis parmi l'atome d'hydrogène et les radicaux méthyle et éthyle, X est un atome d'halogène et A est choisi parmi l'atome d'oxygène et le radical NH, et

- (II) les composés de formule :

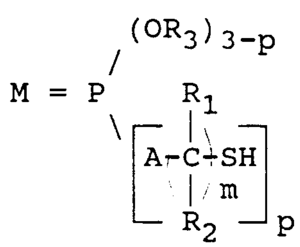

dans laquelle $1 \leqq p \leqq 3, 1 \leqq m \leqq 4$, $R_1$ et $R_2$ sont choisis parmi l'atome d'hydrogène et les radicaux méthyle et éthyle, et

. soit $R_3$ est choisi parmi les radicaux hydrocarbonés saturés ayant de 1 à 6 atomes de carbone, M est le soufre et A est l'oxygène,

. soit $R_3$ est le radical méthyle, M est choisi parmi le soufre et l'oxygène et A est choisi parmi l'oxygène et le radical NH

à l'exception de ceux pour lesquels :

. p = 1, $R_3$ est le radical méthyle, A est l'oxygène, M est l'oxygène, m = 2 et $R_1 = R_2$ = hydrogène ou méthyle, ou bien

. p = 3, M est l'oxygène, m = 2, A est choisi parmi l'oxygène, le soufre ou le radical NH, ou encore p = 1, M est le soufre, A est le radical NH, $2 < m < 7$, $R_1 = R_2$ = hydrogène ou méthyle.

par réaction, dans au moins un solvant et à une température comprise entre -40° et +60°C, entre d'une part un composé de formule :

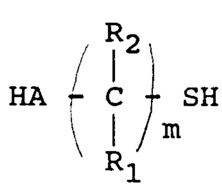

dans laquelle A, $R_1$, $R_2$ et m ont les significations précitées et d'autre part un composé phosphoré choisi parmi :

- les hexahalogénocyclotriphosphazènes de formule $P_3N_3X_6$ (pour l'obtention des composés de formule I), et
- les halogénophosphates de formule développée :

```
           (X)p
          /
  M = P
          \
           (OR3)3-p
```

dans laquelle M, $R_3$ et p ont les significations précitées et X est un atome d'halogène (pour l'obtention des composés de formule II).

Ce procédé permet la préparation des composés constituant le premier objet de l'invention ainsi que, en outre, de certains composés déjà connus par l'état de la technique résumé ci-dessus.

Pour la préparation des composés de formule (I), le procédé selon l'invention est mis en oeuvre en utilisant de préférence un solvant choisi parmi l'eau et le méthanol. Pour la préparation des composés de formule (II), le procédé selon l'invention est mis en oeuvre en utilisant de préférence un solvant apte à capter l'halogénure d'hydrogène formé par la réaction et à contrôler la température. Le procédé selon l'invention permet d'obtenir, à l'issue d'une durée de réaction comprise généralement entre 10 et 60 minutes, lesdits composés organophosphorés avec des rendements élevés.

Un troisième objet de la présente invention concerne l'application des composés organophosphorés décrits précédemment ou susceptibles d'être obtenus à partir du procédé de préparation décrit précédemment à l'obtention de compositions ignifugées à base de polymères obtenus par polymérisation radicalaire, tels que des polymères acryliques, des polymères de styrène, du polyéthylène. De telles compositions comprennent au moins un polymère obtenu par polymérisation en présence d'au moins un initiateur de radicaux libres et d'au moins un desdits composés organophosphorés. Ce mode de polymérisation est bien connu de l'homme de l'art.

Dans le cas des polymères d'esters acrylique et/ou méthacrylique, la polymérisation est effectuée selon le procédé masse bien connu, c'est-à-dire jusqu'à épuisement du(des) monomère(s). La concentration de l'initiateur de radicaux libres est habituellement comprise entre $5.10^{-3}$ et 0,1 mole par litre de monomère(s). Par initiateur de radicaux libres au sens de la présente invention, on entend notamment les composés diazoïques (tels que l'azo-bis-isobutyronitrile), les peroxydes (tels que le peroxyde benzoïque éventuellement en mélange avec la N-méthylparatoluidine) et les hydroperoxydes. De préférence la concentration du composé organophosphoré est comprise entre 0,02 et 1,5 mole par litre de monomère(s), selon le piods moléculaire du polymère à fabriquer. Par ester acrylique et/ou méthacrylique au sens de la présente invention, on entend un acrylate ou méthacrylate d'alkyle dont le groupe alkyle possède de 1 à 12 atomes de carbone. Le cas échéant la polymérisation peut être effectuée en présence d'au moins un comonomère réticulant choisi parmi les N-hydroxyalcoylamides des acides acrylique et méthacrylique, l'acrylamide, la méthacrylamide, le divinylbenzène et les oligoacrylates et oligométh acrylates de polyols tels que notamment le triéthylèneglycol di(méth)acrylate, l'éthylèneglycol diméthacrylate, le tétraéthylèneglycol di(méth)-acrylate, le polyéthylèneglycol 200 di(méth)acrylate, le 1,6-hexanediol di(méth)acrylate, le néopentylglycoldi(méth)acrylate, le 1,3-butylèneglycol di(méth)acrylate, le diéthylèneglycol di(méth)acrylate, le triméthylolpropane tri(méth)acrylate, le di(méth)acrylate de bisphénol A éthoxylé, le tétraacrylate de pentaerythritol, le tripropylèneglycol diacrylate, le dipentaérythritol hydroxypentaacrylate, le triacrylate de trihydroxyéthylisocyanurate et le triacrylate de triméthylolpropane éthoxylé.

Les polymères d'ester (méth)acrylique entrant dans les compositions ignifugées selon l'invention ont un taux de phosphore généralement compris entre 0,1 et 5 % en poids pour un poids moléculaire (moyenne en nombre déterminée par chromatographie de perméation de gel) allant de 2.000 à 30.000 environ. Leur indice limite d'oxygène (mesuré selon la norme ASTM D 2863) peut couramment atteindre des valeurs comprises entre 40 et 65.

Les compositions ignifugées selon l'invention peuvent comprendre, outre le polymère obtenu en présence d'un composé organophosphoré, au moins un polymère ordinaire (c'est-à-dire non phosphoné) ayant de préférence un poids moléculaire supérieur à celui de polymère phosphoné, ces deux polymères étant parfaitement miscibles en toutes proportions.

Il convient de remarquer que l'emploi de certains composés organophosphorés selon l'invention peut conduire, dans l'application à l'obtention de compositions de polymères ignifugés, à la formation d'un réseau polymère pluridimensionnel. Ceci est en particulier le cas des composés (I) dans lesquels $n \geqq 2$ et des composés (II) dans lequels $p \geqq 2$.

Les exemples suivants ont pour but d'illustrer, de façon non limitative, la présente invention.

EXEMPLE 1 - Synthèse du monocystéaminopentachlorocyclotriphosphazène.

On ajoute à 25 g (0,07 mole) d'hexachlorocyclotriphosphazène en solution dans 200 ml de diéthyléther, une solution de 15,9 g (0,14 mole) de chlorure de cystéammonium dans 75 ml d'eau. On ajoute à ce mélange, en maintenant le température à 10 ° C, 140 ml d'une solution normale de soude. On laisse le mélange revenir à température ambiante et le maintient pendant 4 heures sous agitation. Après extraction à l'éther, séchage, filtration et évaporation du solvant on purifie le produit obtenu par chromatographie sur colonne de silice (éluant : hexane/toluène 1/1) et on obtient, avec un rendement de 50 % le composé :

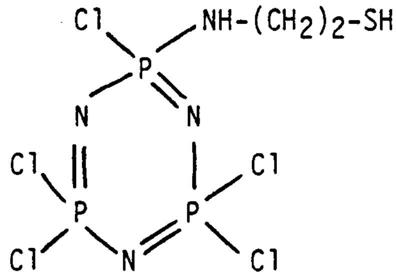

EXEMPLE 2 - Synthèse du diméthylthio,N-cystéaminophosphate.

On ajoute lentement, à la température de 20 ° C, 15,4 g (0,2 mole) de cystéamine à une solution de 12 ml (0,1 mole) de chlorothiophosphate de diméthyle dans 50 ml de toluène. On filtre et lave au toluène le précipité formé. On évapore le filtrat et purifie le produit obtenu par chromatographie sur colonne de silice (éluant : méthanol/toluène 1/9). On obtient, avec un rendement de 90 % le composé de formule :

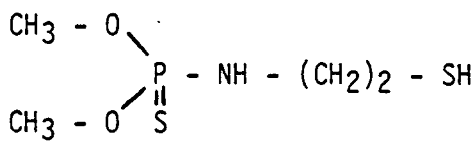

EXEMPLE 3 - Synthèse du diéthyl, N-cystéaminophosphate.

Dans les mêmes conditions qu'à l'exemple 2, on remplace le chlorothiophosphate de diméthyle par le chlorophosphate de diéthyle. On obtient avec le même rendement le composé :

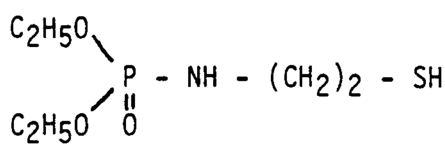

EXEMPLE 4 - Synthèse du diéthylthioéthylphosphate.

A une solution de 72,5 ml (0,5 mole) de diéthylchlorophosphate dans 100 ml de toluène, on ajoute lentement, à la température de 20 ° C, un mélange constitué de :

- 35 ml (0,5 mole) de mercaptoéthanol,
- 40 ml (0,5 mole) de pyridine,
- 50 ml de toluène.

On constate presque immédiatement la formation d'un précipité blanc. On maintient l'agitation pendant quelques minutes puis on filtre le précipité. On récupère le filtrat, on le lave plusieurs fois à l'eau légèrement acidulée (pH 5,5-6), puis on extrait au toluène. La phase organique est séchée et filtrée, puis on évapore le toluène. On obtient avec un rendement de 93 % le composé de formule :

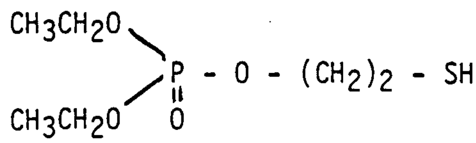

EXEMPLE 5 - Synthèse du diméthyldithioéthylphosphate.

Dans les mêmes conditions qu'à l'exemple 4, on remplace le diéthylchlorophosphate par le diméthylthiochlorophosphate. On obtient avec le même rendement le composé de formule :

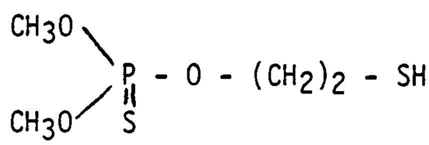

EXEMPLES 6 à 10 - Préparation de polyméthacrylate de méthyle phosphoné.

On réalise la polymérisation en masse du méthacrylate de méthyle en accroissant progressivement la température de 55 °C jusqu'à 90 °C, pendant une durée totale de 90 minutes, en présence de 0,04 mole/litre d'azobis-isobutyronitrile comme initiateur de radicaux libres et d'un composé organophosphoré décrit à l'un des exemples précédents. La nature et la concentration (exprimée en moles par litre) du composé organophosphoré utilisé sont indiquées dans le tableau I.

On a mesuré, sur le polymère obtenu :

- le taux de phosphore P exprimé en % en poids et déterminé par analyse élémentaire,
- la masse moléculaire moyenne en nombre Mn déterminée par chromatographie par perméation de gel,
- l'indice d'oxygène limite IOL mesuré selon la norme ASTM D 2863

Les résultats des mesures figurent au Tableau I.

TABLEAU I

| Exemple | composé organophosphoré | | Mn | P % | I.O.L. |
|---|---|---|---|---|---|
| | nature | conc. | | | |
| 6 | ex. 1 | 0,8 | 2.800 | 4,0 | 45 |
| 7 | ex. 2 | 1,1 | 2.200 | 2,0 | 44 |
| 8 | ex. 4 | 0,1 | 16.000 | 0,2 | 45 |
| 9 | ex. 4 | 0,3 | 4.500 | 0,7 | 54 |
| 10 | ex. 4 | 0,6 | 2.300 | 1,2 | 65 |

EXEMPLE 11 - Composition de polymère acrylique ignifugée.

On prépare une composition de polymère acrylique ignifugée en mélangeant :

- 81 parties en poids d'un polyméthacrylate de méthyle phosphoné semblable à celui de l'exemple 10, mais présentant un taux de phosphore de 1,1 % en poids, une masse moléculaire moyenne en nombre $M_n$ égale à 2.800 et un indice d'oxygène limite égal à 50.
- 19 parties en poids d'un polyméthacrylate de méthyle ayant une masse moléculaire moyenne en nombre $M_n$ égale à 60.000 et un indice d'oxygène limite égal à 18,5.

La composition ainsi obtenue présente un indice d'oxygène limite égal à 45.

## Revendications

**1.** Composés organophosphorés choisis parmi :

- (I) les dérivés soufrés d'hexahalogénocyclotriphosphazène de formule :

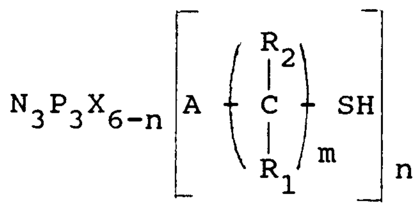

dans laquelle $1 \leqq n \leqq 5$, $1 \leqq m \leqq 4$, $R_1$ et $R_2$ sont choisis parmi l'atome d'hydrogène et les radicaux méthyle et éthyle, X est un atome d'halogène et A est choisi parmi l'atome d'oxygène et le radical NH, et

- (II) les composés de formule :

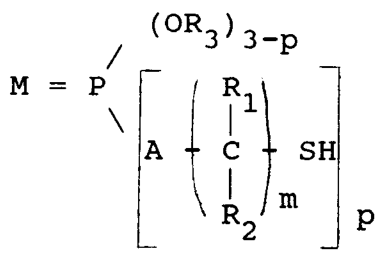

dans laquelle $1 \leqq p \leqq 3$, $1 \leqq m \leqq 4$, $R_1$ et $R_2$ sont choisis parmi l'atome d'hydrogène et les radicaux méthyle et éthyle et :

. soit $R_3$ est choisi parmi les radicaux hydrocarbonés saturés ayant de 1 à 6 atomes de carbone, M est le soufre et A est l'oxygène,

. soit $R_3$ est le radical méthyle, M est choisi parmi le soufre et l'oxygène et A est choisi parmi l'oxygène et le radical NH,

à l'exception de ceux pour lesquels :

. p = 1, $R_3$ est le radical méthyle, A est l'oxygène, M est l'oxygène, m = 2 et $R_1 = R_2$ = hydrogène ou méthyle, ou bien

. p = 3, M est l'oxygène, m = 2, A est choisi parmi l'oxygène, le soufre ou le radical NH, ou encore

. p = 1, M est le soufre, A est le radical NH, $2 \leqq m \leqq 7$, $R_1 = R_2$ = hydrogène ou méthyle.

**2.** Composé organophosphoré selon la revendication 1, dénommé monocystéaminopentachlorocyclotriphosphazène.

**3.** Composé organophosphoré selon la revendication 1, dénommé diéthyl-N-cystéinaminophosphate de formule :

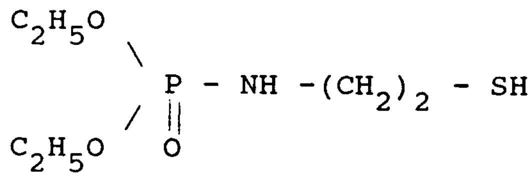

4. Composé organophosphoré selon la revendication 1, dénommé diméthyldithioéthylphosphate de formule :

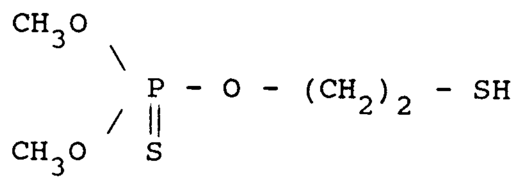

5. Procédé de préparation de composés organophosphorés choisis parmi :
   - (I) les dérivés soufrés d'hexahalogénocyclotriphosphazène de formule :

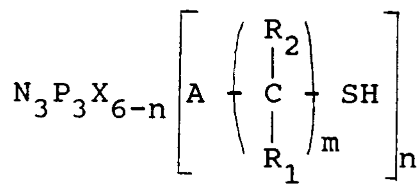

dans laquelle $1 \leqq n \leqq 6$, $1 \leqq m \leqq 4$, $R_1$ et $R_2$ sont choisis parmi l'atome d'hydrogène et les radicaux méthyle et éthyle, X est un atome d'halogène et A est choisi parmi l'atome d'oxygène et le radical NH, et
   - (II) les composés de formule :

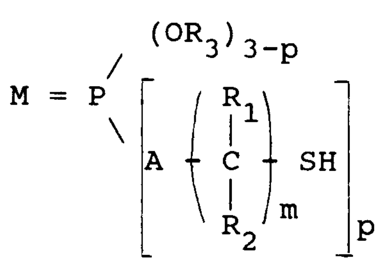

dans laquelle $1 \leqq p \leqq 3$, $1 \leqq m \leqq 4$, $R_1$ et $R_2$ sont choisis parmi l'atome d'hydrogène et les radicaux méthyle et éthyle, et :
. soit $R_3$ est choisi parmi les radicaux hydrocarbonés saturés ayant de 1 à 6 atomes de carbone, M est le soufre et A est l'oxygène,
. soit $R_3$ est le radical méthyle, M est choisi parmi le soufre et l'oxygène et A est choisi parmi l'oxygène et le radical NH,
à l'exception de ceux pour lesquels :
. p = 1, $R_3$ est le radical méthyle, A est l'oxygène, M est l'oxygène, m = 2 et $R_1$ = $R_2$ = hydrogène ou méthyle, ou bien
. p = 3, M est l'oxygène, m = 2, A est choisi parmi l'oxygène, le soufre ou le radical NH, ou encore

. $p = 1$, M est le soufre, A est le radical NH, $2 < m < 7$, $R_1 = R_2$ = hydrogène ou méthyle, par réaction, dans au moins un solvant et à une température comprise entre -40° et +60° C, entre d'une part un composé de formule :

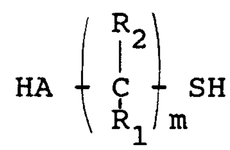

dans laquelle A, $R_1$, $R_2$ et m ont les significations précitées et d'autre part un composé phosphoré choisi parmi :

- les hexahalogénocyclotriphosphazènes de formule $P_3N_3X_6$ (pour l'obtention des composés de formule I), et
- les halogénophosphates de formule développée :

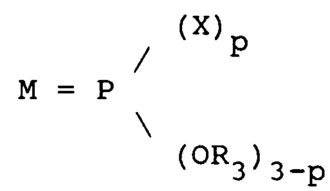

dans laquelle M, $R_3$ et p ont les significations précitées et X est un atome d'halogène (pour l'obtention des composés de formule II).

**6.** Procédé selon la revendication 5, caractérisé en ce que, pour la préparation des composés de formule (I), on utilise un solvant choisi parmi l'eau et le méthanol.

**7.** Procédé selon la revendication 5, caractérisé en ce que, pour la préparation des composés de formule (II), on utilise un solvant apte à capter l'halogénure d'hydrogène formé par la réaction et à contrôler la température.

**8.** Procédé selon l'une des revendications 5 à 7, caractérisé en ce que la durée de la réaction est comprise entre 10 et 60 minutes.

**9.** Composition polymère ignifugée, caractérisée en ce qu'elle comprend au moins un polymère obtenu par polymérisation en présence d'au moins un initiateur de radicaux libres et d'au moins un composé organophosphoré choisi parmi :

- (I) les dérivés soufrés d'hexahalogénocyclotriphosphazène de formule :

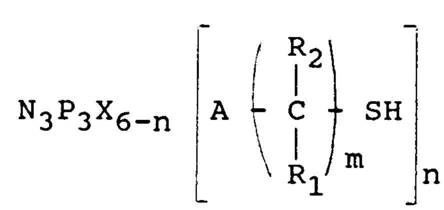

dans laquelle $1 \leqq n \leqq 5$, $1 \leqq m \leqq 4$, $R_1$ et $R_2$ sont choisis parmi l'atome d'hydrogène et les radicaux méthyle et éthyle, X est un atome d'halogène et A est choisi parmi l'atome d'oxygène et le radical NH, et

- (II) les composés de formule :

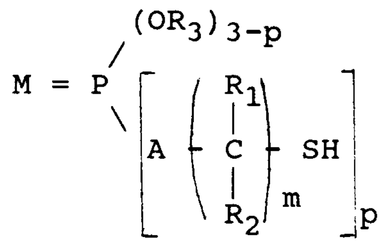

dans laquelle 1 ≦ p ≦ 3, 1 ≦ m ≦ 4, $R_1$ et $R_2$ sont choisis parmi l'atome d'hydrogène et les radicaux méthyle et éthyle et :

. soit $R_3$ est choisi parmi les radicaux hydrocarbonés saturés ayant de 1 à 6 atomes de carbone, M est le soufre et A est l'oxygène,

. soit $R_3$ est le radical méthyle, M est choisi parmi le soufre et l'oxygène et A est choisi parmi l'oxygène et le radical NH.

**10.** Composition polymère ignifugée selon la revendication 9, caractérisée en ce que le polymère obtenu par polymérisation en présence d'au moins un initiateur de radicaux libres est choisi parmi les polymères d'ester (méth)acrylique, les polymères de styrène et le polyéthylène.

**11.** Composition polymère ignifugée selon la revendication 10, le polymère étant un polymère d'au moins un ester (méth)acrylique, caractérisée en ce que la concentration du composé organophosphoré est comprise entre 0,02 et 1,5 mole par litre d'ester (méth)acrylique.

**12.** Composition polymère ignifugée selon la revendication 10, le polymère étant un polymère d'au moins un ester (méth)acrylique, caractérisée en ce que la polymérisation est effectuée en présence d'au moins un comonomère réticulant choisi parmi les N-hydroxyalcoylamides des acides acrylique et méthacrylique, l'acrylamide, la méthacrylamide, le divinylbenzène et les oligo(méth)acrylates de polyols.

**13.** Composition polymère ignifugée selon l'une des revendications 10 à 12, caractérisée en ce que le polymère est un polymère d'ester (méth)acrylique de poids moléculaire compris entre 2 000 et 30 000.

**14.** Composition polymère ignifugée selon l'une des revendications 9 à 13, caractérisée en ce qu'elle comprend en outre au moins un polymère non phosphoné.

**15.** Composition polymère ignifugée selon la revendication 14, caractérisée en ce que le poids moléculaire du polymère non phosphoné est supérieur à celui du polymère phosphoné.

## Claims

**1.** Organophosphorus compounds chosen from:

- (I) hexahalocyclotriphosphazene sulphur derivatives of formula:

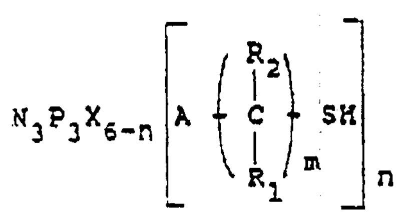

in which 1 ≦ n ≦ 5, 1 ≦ m ≦ 4, $R_1$ and $R_2$ are chosen from the hydrogen atom and methyl and ethyl radicals, X is a halogen atom and A is chosen from the oxygen atom and the NH radical, and

- (II) the compounds of formula:

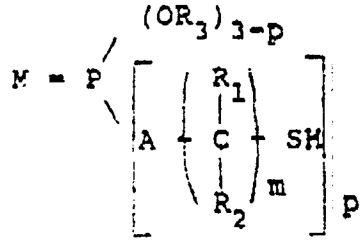

in which $1 \leq p \leq 3$, $1 \leq m \leq 4$, $R_1$ and $R_2$ are chosen from the hydrogen atom and methyl and ethyl radicals and:

- either $R_3$ is chosen from saturated hydrocarbon radicals containing from 1 to 6 carbon atoms, M is sulphur and A is oxygen,
- or $R_3$ is the methyl radical, M is chosen from sulphur and oxygen and A is chosen from oxygen and the NH radical,

with the exception of those in which:

- p = 1, $R_3$ is the methyl radical, A is oxygen, M is oxygen, m = 2 and $R_1 = R_2$ = hydrogen or methyl, or else
- p = 3, M is oxygen, m = 2, A is chosen from oxygen, sulphur and the NH radical, or else
- p = 1, M is sulphur, A is the NH radical, $2 \leq m \leq 7$, $R_1 = R_2$ = hydrogen or methyl.

**2.** Organophosphorus compound according to Claim 1, called monocysteaminopentachlorocyclotriphosphazene.

**3.** Organophosphorus compound according to Claim 1, called diethyl N-cysteinaminophosphate of formula:

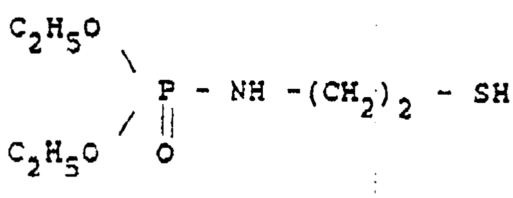

**4.** Organophosphorus compound according to Claim 1, called dimethyl dithioethylphosphate of formula:

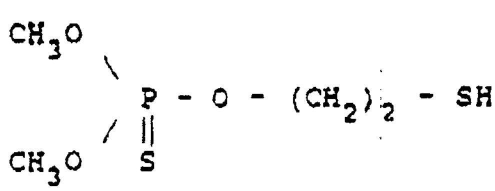

**5.** Process for the preparation of organophosphorus compounds chosen from:

- (I) the hexahalocyclotriphosphazene sulphur derivatives of formula:

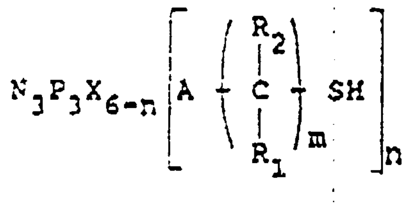

in which 1 ≦ n ≦ 6, 1 ≦ m ≦ 4, $R_1$ and $R_2$ are chosen from the hydrogen atom and methyl and ethyl radicals, X is a halogen atom and A is chosen from the oxygen atom and the NH radical, and

- (II) the compounds of formula:

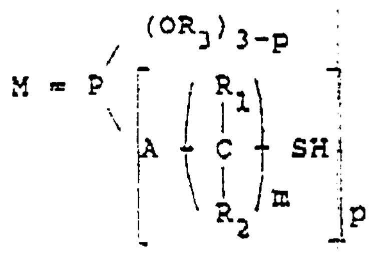

in which 1 ≦ p ≦ 3, 1 ≦ m ≦ 4, $R_1$ and $R_2$ are chosen from the hydrogen atom and methyl and ethyl radicals, and:

- either $R_3$ is chosen from saturated hydrocarbon radicals containing from 1 to 6 carbon atoms, M is sulphur and A is oxygen,
- or $R_3$ is the methyl radical, M is chosen from sulphur and oxygen and A is chosen from oxygen and the NH radical,

with the exception of those in which:

- p = 1, $R_3$ is the methyl radical, A is oxygen, M is oxygen, m = 2 and $R_1$ = $R_2$ = hydrogen or methyl, or else
- p = 3, M is oxygen, m = 2, A is chosen from oxygen, sulphur and the NH radical, or else
- p = 1, M is sulphur, A is the NH radical, 2 < m < 7, $R_1$ = $R_2$ = hydrogen or methyl,

by reaction, in at least one solvent and at a temperature of between -40° and +60°C, between, on the one hand, a compound of formula:

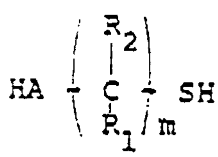

in which A, $R_1$, $R_2$ and m have the abovementioned meanings and, on the other hand, a phosphorus compound chosen from:

- hexahalocyclotriphosphazenes of formula $P_3N_3X_6$ (to obtain the compounds of formula I), and
- halophosphates of structural formula:

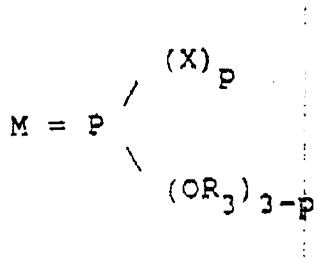

in which M, $R_3$ and p have the abovementioned meanings and X is a halogen atom (to obtain the compounds of formula II).

**6.** Process according to Claim 5, characterised in that a solvent chosen from water and methanol is employed for the preparation of the compounds of formula (I).

**7.** Process according to Claim 5, characterised in that a solvent capable of scavenging the hydrogen halide formed by the reaction and of controlling the temperature is employed for the preparation of the compounds of formula (II).

**8.** Process according to one of Claims 5 to 7, characterised in that the reaction period is between 10 and 60 minutes.

**9.** Fire-resistant polymer composition characterised in that it comprises at least one polymer obtained by polymerisation in the presence of at least one free radical initiator and of at least one organophosphorus compound chosen from:

- (I) the hexahalocyclotriphosphazene sulphur derivatives of formula:

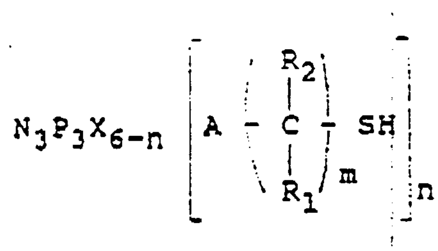

in which $1 \leqq n \leqq 5$, $1 \leqq m \leqq 4$, R, and $R_2$ are chosen from the hydrogen atom and methyl and ethyl radicals, X is a halogen atom and A is chosen from the oxygen atom and the NH radical, and

- (II) the compounds of formula:

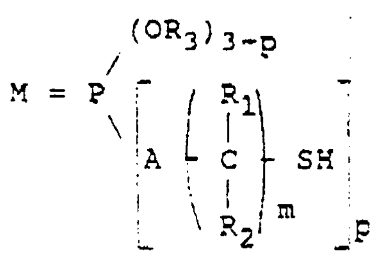

in which $1 \leqq p \leqq 3$, $1 \leqq m \leqq 4$, $R_1$ and $R_2$ are chosen from the hydrogen atom and methyl and ethyl radicals, and:

- either $R_3$ is chosen from saturated hydrocarbon radicals containing from 1 to 6 carbon atoms, M is sulphur and A is oxygen,
- or $R_3$ is the methyl radical, M is chosen from sulphur and oxygen and A is chosen from

oxygen and the NH radical.

**10.** Fire-resistant polymer composition according to Claim 9, characterised in that the polymer obtained by polymerisation in the presence of at least one free radical initiator is chosen from (meth)acrylic ester polymers, styrene polymers and polyethylene.

**11.** Fire-resistant polymer composition according to Claim 10, the polymer being a polymer of at least one (meth)acrylic ester, characterised in that the concentration of the organophosphorus compound is between 0.02 and 1.5 moles per litre of (meth)acrylic ester.

**12.** Fire-resistant polymer composition according to Claim 10, the polymer being a polymer of at least one (meth)acrylic ester, characterised in that the polymerisation is performed in the presence of at least one crosslinking comonomer chosen from the N-hydroxyalkylamides of acrylic and methacrylic acids, acrylamide, methacrylamide, divinylbenzene and polyol oligo(meth)acrylates.

**13.** Fire-resistant polymer composition according to one of Claims 10 to 12, characterised in that the polymer is a (meth)acrylic ester polymer of molecular weight between 2,000 and 30,000.

**14.** Fire-resistant polymer composition according to one of Claims 9 to 13, characterised in that it additionally comprises at least 1 nonphosphonated polymer.

**15.** Fire-resistant polymer composition according to Claim 14, characterised in that the molecular weight of the nonphosphonated polymer is higher than that of the phosphonated polymer.

## Patentansprüche

**1.** Phosphororganische Verbindungen ausgewählt aus:
(I) den Schwefelderivaten des Hexahalogencyclotriphosphazens der Formel

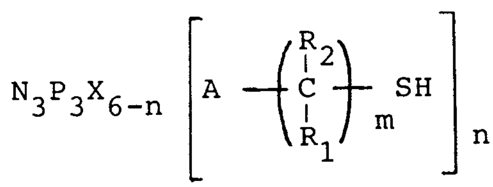

in der $1 \leqq n \leqq 5$, $1 \leqq m \leqq 4$, $R_1$ und $R_2$ aus einem Wasserstoffatom und Methyl- und Ethylresten ausgewählt sind, X ein Halogenatom und A aus Sauerstoff und einem NH-Rest ausgewählt ist, und
(II) den Verbindungen der Formel:

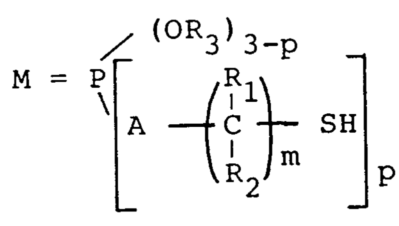

in der $1 \leqq p \leqq 3$, $1 \leqq m \leqq 4$, $R_1$ und $R_2$ aus einem Wasserstoffatom und Methyl- und Ethylresten ausgewählt sind, und:

. entweder $R_3$ aus gesättigten Kohlenwasserstoffresten mit 1 bis 6 Kohlenstoffatomen ausgewählt ist, und M Schwefel und A Sauerstoff ist,
. oder $R_3$ ein Methylrest ist, M aus Schwefel und Sauerstoff und A aus Sauerstoff und einem NH-Rest ausgewählt ist,

mit Ausnahme der Verbindungen, in denen:

. p = 1, $R_3$ ein Methylrest, A Sauerstoff, M Sauerstoff, m = 2 und $R_1$ = $R_2$ = Wasserstoff

oder Methyl ist, oder

. p = 3, M Sauerstoff, m = 2, A aus Sauerstoff, Schwefel oder dem NH-Rest ausgewählt ist, oder

. p = 1, M Schwefel, A der NH-Rest ist, 2 ≦ m ≦ 7, $R_1$ = $R_2$ = Wasserstoff oder Methyl ist.

**2.** Phosphororganische Verbindung nach Anspruch 1, nämlich Monocysteinaminopentachlorcyclotriphosphazen.

**3.** Phosphororganische Verbindung nach Anspruch 1, nämlich Diethyl-N-cysteinaminophosphat der Formel:

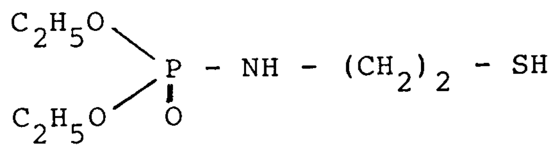

**4.** Phosphororganische Verbindung nach Anspruch 1, nämlich Dimethyldithioethylphosphat der Formel:

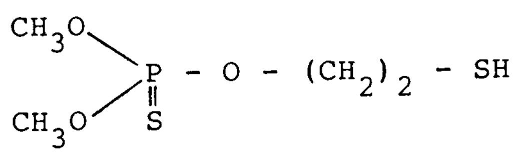

**5.** Verfahren zur Herstellung von phosphororganischen Verbindungen ausgewählt aus:
(I) den Schwefelderivaten des Hexahalogencyclotriphosphazens der Formel

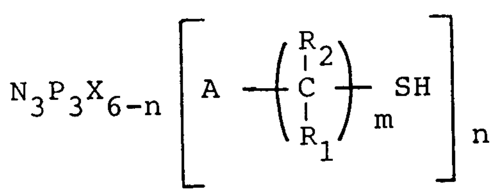

in der 1 ≦ n ≦ 6, 1 ≦ m ≦ 4, $R_1$ und $R_2$ aus einem Wasserstoffatom und Methyl- und Ethylresten ausgewählt sind, X ein Halogenatom und A aus Sauerstoff und einem NH-Rest ausgewählt ist, und
(II) den Verbindungen der Formel:

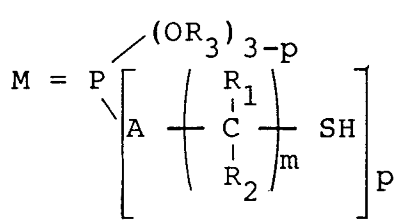

in der 1 ≦ p ≦ 3, 1 ≦ m ≦ 4, $R_1$ und $R_2$ aus einem Wasserstoffatom und Methyl- und Ethylresten ausgewählt sind, und:

. entweder $R_3$ aus gesättigten Kohlenwasserstoffresten mit 1 bis 6 Kohlenstoffatomen ausgewählt ist, und M Schwefel und A Sauerstoff ist,

. oder $R_3$ ein Methylrest ist, M aus Schwefel und Sauerstoff und A aus Sauerstoff und einem NH-Rest ausgewählt ist,

mit Ausnahme der Verbindungen, in denen:

. p = 1, $R_3$ ein Methylrest, A Sauerstoff, M Sauerstoff, m = 2 und $R_1$ = $R_2$ = Wasserstoff oder Methyl ist, oder

. p = 3, M Sauerstoff, m = 2, A aus Sauerstoff, Schwefel oder dem NH-Rest ausgewählt ist, oder

. p = 1, M Schwefel, A der NH-Rest ist, $2 < m < 7$, $R_1$ = $R_2$ = Wasserstoff oder Methyl ist,

durch Reaktion in wenigstens einem Lösungsmittel und bei einer Temperatur zwischen -40° und +60°C zwischen einer Verbindung der Formel:

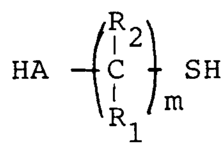

in der A, $R_1$, $R_2$ und m die vorgenannten Bedeutungen haben einerseits und andererseits einer Phosphorverbindung ausgewählt aus:

- Hexahalogencyclotriphosphazenen der Formel $P_3N_3X_6$ (zur Gewinnung der Verbindungen der Formel I), und
- Halogenphosphaten der allgemeinen Formel:

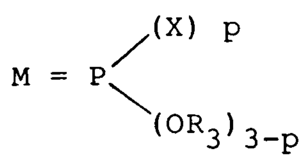

in der M, $R_3$ und p die vorgenannten Bedeutungen haben und X ein Halogenatom ist (zur Gewinnung der Verbindungen der Formel (II).

**6.** Verfahren nach Anspruch 5, dadurch gekennzeichnet, daß man zur Herstellung der Verbindungen der Formel (I) ein Lösungsmittel, ausgewählt aus Wasser oder Methanol, verwendet.

**7.** Verfahren nach Anspruch 5, dadurch gekennzeichnet, daß man zur Herstellung der Verbindungen der Formel (II) ein Lösungsmittel verwendet, das geeignet ist, die bei der Reaktion gebildeten Wasserstoffhalogenide aufzufangen und die Temperatur zu kontrollieren.

**8.** Verfahren nach einem der Ansprüche 5 bis 7, dadurch gekennzeichnet, daß die Reaktionsdauer zwischen 10 und 60 Minuten beträgt.

**9.** Flammhemmende Polymerzusammensetzung, dadurch gekennzeichnet, daß sie wenigstens ein Polymer enthält, das durch Polymerisation in Gegenwart von wenigstens einem Initiator mit freien Radikalen und wenigstens einer phosphororganischen Verbindung gewonnen wurde, die ausgewählt ist aus:

(I) den Schwefelderivaten des Hexahalogencyclotriphosphazens der Formel

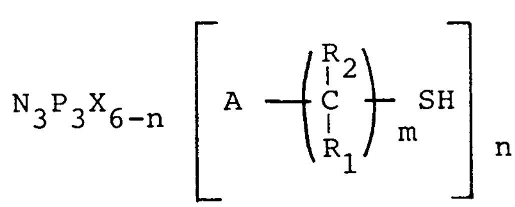

in der 1 ≦ n ≦ 5, 1 ≦ m ≦ 4, $R_1$ und $R_2$ aus einem Wasserstoffatom und Methyl- und Ethylresten ausgewählt sind, X ein Halogenatom und A aus Sauerstoff und einem NH-Rest ausgewählt ist, und (II) den Verbindungen der Formel:

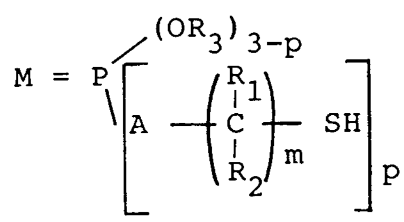

in der 1 ≦ p ≦ 3, 1 ≦ m ≦ 4, $R_1$ und $R_2$ aus einem Wasserstoffatom und Methyl- und Ethylresten ausgewählt sind, und:

. entweder $R_3$ aus gesättigten Kohlenwasserstoffresten mit 1 bis 6 Kohlenstoffatomen ausgewählt ist, und M Schwefel und A Sauerstoff ist,

. oder $R_3$ ein Methylrest ist, M aus Schwefel und Sauerstoff und A aus Sauerstoff und einem NH-Rest ausgewählt ist.

**10.** Flammhemmende Polymerzusammensetzung nach Anspruch 9, dadurch gekennzeichnet, daß das Polymer, das durch Polymerisation in Gegenwart von wenigstens einem Initiator mit freien Radikalen gewonnen wird, aus Polymeren von (Meth)acrylestern, Styrolpolymeren und Polyethylen ausgewählt ist.

**11.** Flammhemmende Polymerzusammensetzung nach Anspruch 10, bei der das Polymer ein Polymer wenigstens eines (Meth)acrylesters ist, dadurch gekennzeichnet, daß die Konzentration der phosphororganischen Verbindung zwischen 0,02 und 1,5 Mol pro Liter (Meth)acrylesters beträgt.

**12.** Flammhemmende Polymerzusammensetzung nach Anspruch 10, bei dem das Polymer ein Polymer wenigstens eines (Meth)acrylesters ist, dadurch gekennzeichnet, daß die Polymerisation in Gegenwart von wenigstens einem vernetzenden Comonomeren durchgeführt wird, das aus N-Hydroxyalkylamiden von Acryl- und Methacrylsäure, Acrylamid, Methylacrylamid, Divinylbenzol und Oligo(meth)acrylaten von Polyolen, ausgewählt ist.

**13.** Flammhemmende Polymerzusammensetzung nach einem der Ansprüche 10 bis 12, dadurch gekennzeichnet, daß das Polymer ein (Meth)acrylesterpolymeres mit einem Molekulargewicht zwischen 2 000 und 30 000 ist.

**14.** Flammhemmende Polymerzusammensetzung nach einem der Ansprüche 9 bis 13, dadurch gekennzeichnet, daß sie außerdem wenigstens ein nicht phosphoniertes Polymeres enthält.

**15.** Flammhemmende Polymerzusammensetzung nach Anspruch 14, dadurch gekennzeichnet, daß das Molekulargewicht des nicht phosphonierten Polymeren höher als das des phosphonierten Polymers ist.